# DEMANDE DE BREVET EUROPEEN

(11) **EP 4 414 701 A1**
(43) Date de publication de la demande: **14.08.2024**
(21) Numéro de dépôt: 24156814.6
(22) Date de dépôt: 09.02.2024
(51) Int. Cl.: G01N 27/416, G01N 27/06, G01N 35/00, G01N 35/10

(54) **SYSTÈME DE SUIVI DE L'ÉVOLUTION D'AU MOINS UNE CARACTÉRISTIQUE D'UN MÉLANGE RÉACTIF DANS UN RÉCIPIENT**

(30) Priorité: 09.02.2023 FR 2301207
(71) Demandeur: Eurosmart, 77400 Lagny-Sur-Marne (FR)
(72) Inventeur: BORIE, Jean-Marc, 75020 PARIS (FR); COINTREAU, Cyril, 93160 NOISY LE GRAND (FR)
(74) Mandataire: Lavoix

(57) **Abrégé**

Ce système de suivi de l'évolution d'au moins une caractéristique d'un mélange réactif dans un récipient (1) est caractérisé en ce qu'il comporte :
- des moyens (4) d'ajout d'au moins un agent réactif dans le mélange dans le récipient ;
- des moyens (7) de mesure de la quantité d'agent réactif ajoutée ;
- des moyens (8) de relevé de l'évolution de la caractéristique du mélange dans le récipient ;
- des moyens (9) de mise en relation de l'évolution de cette caractéristique en fonction de la quantité d'agent ajoutée ; et
- des moyens (10) de délivrance d'informations relatives à cette évolution.

## Description

La présente invention concerne un système de suivi de l'évolution d'au moins une caractéristique d'un mélange réactif dans un récipient.

De tels systèmes sont par exemple utilisés dans un cadre d'enseignement permettant à des élèves ou des étudiants de mettre en oeuvre des systèmes de mesures notamment électrochimiques d'évolution de mélanges réactifs.

Dans ces applications, les relevés se font de façon manuelle, les élèves étant amenés à reporter sur des tableaux papier les relevés d'évolution des caractéristiques des mélanges.

Mais ceci présente un certain nombre d'inconvénients notamment au niveau de l'automatisation, de la fiabilité et de la rapidité des relevés et de la délivrance ou restitution d'informations.

Le but de l'invention est donc de résoudre ces problèmes.

A cet effet, l'invention a pour objet un système de suivi de l'évolution d'au moins une caractéristique d'un mélange réactif dans un récipient, caractérisé en ce qu'il comporte :
- des moyens d'ajout d'au moins un agent réactif dans le mélange dans le récipient ;
- des moyens de mesure de la quantité d'agent réactif ajoutée ;
- des moyens de relevé de l'évolution de la caractéristique du mélange dans le récipient ;
- des moyens de mise en relation de l'évolution de cette caractéristique en fonction de la quantité d'agent ajoutée ; et
- des moyens de délivrance d'informations relatives à cette évolution.

Suivant d'autres caractéristiques du système selon l'invention, prises seules ou en combinaison :
- les moyens de mesure de la quantité d'agent réactif ajoutée comprennent des moyens en forme de compte-gouttes ;
- la caractéristique dont l'évolution est relevée est une caractéristique choisie dans le groupe comprenant notamment le pH et/ou la conductivité du mélange ;
- les moyens de délivrance des informations d'évolution sont choisis dans le groupe comprenant notamment des moyens d'affichage et/ou des moyens d'impression d'un graphique illustrant celles-ci.

L'invention sera mieux comprise à l'aide de la description qui va suivre, donnée uniquement à titre d'exemple et faite en se référant au dessin annexé, sur lequel :

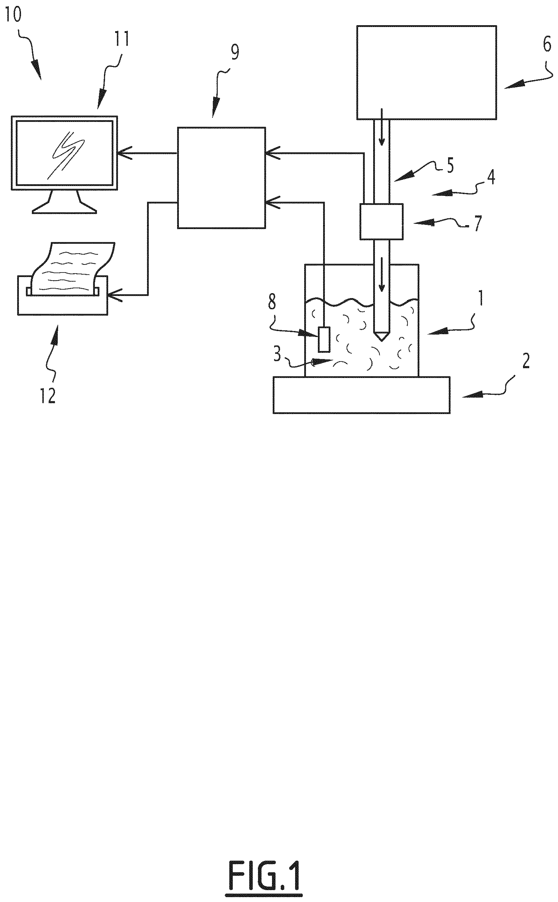

- [Fig. 1] La figure 1 représente un schéma synoptique illustrant la structure et le fonctionnement d'un système de suivi selon l'invention.

On a en effet illustré sur cette figure, un système de suivi de l'évolution d'au moins une caractéristique d'un mélange réactif dans un récipient.

Sur cette figure, le récipient est désigné par la référence générale 1 et est constitué par tout récipient approprié.

Celui-ci est par exemple posé sur un socle de support désigné par la référence générale 2.

Le mélange dans le récipient est quant à lui désigné par la référence générale 3 sur cette figure.

Le récipient est associé à des moyens d'ajout d'au moins un agent réactif dans ce mélange dans ce récipient.

Ces moyens d'ajout sont désignés par la référence générale 4 sur cette figure et comprennent par exemple une pipette désignée par la référence générale 5, associée à au moins un réservoir quelconque de stockage d'agent réactif à ajouter, ce réservoir étant désigné par la référence générale 6.

N'importe quel type de réservoir et n'importe quel type d'agent réactif peuvent être envisagés.

On notera également que des moyens de mesure de la quantité d'agent réactif ajoutée dans le réservoir sont prévus.

Ces moyens sont désignés par la référence générale 7 sur cette figure et comprennent par exemple des moyens formant compte-gouttes ou autres.

N'importe quel moyen de mesure de quantité ajoutée, que ce soit des moyens à base de compte-gouttes, de mesure de débit etc. , peuvent être envisagés.

Ainsi, un agent réactif et en particulier une quantité d'agent réactif est introduite dans le mélange de façon régulière.

Le système selon l'invention comporte également des moyens de relevé de l'évolution d'une caractéristique du mélange dans le récipient.

Ces moyens de relevé d'évolution sont désignés par la référence générale 8 sur cette figure.

Ces moyens de relevé peuvent par exemple être des moyens de relevé d'une caractéristique choisie dans le groupe comprenant le pH et/ou la conductivité du mélange.

Bien entendu, d'autres caractéristiques peuvent être envisagées.

Ces moyens de mesure de la quantité d'agent réactif ajoutée et de relevé d'évolution de la caractéristique du mélange sont raccordés à des moyens de mise en relation de l'évolution de cette caractéristique en fonction de la quantité d'agent ajoutée.

Ces moyens de mise en relation sont désignés par la référence générale 9 sur cette figure et comprennent par exemple tout calculateur approprié permettant de mettre en relation l'évolution de la caractéristique et la quantité d'agent ajoutée.

Ces moyens comprennent par exemple tout calculateur approprié de type microprocesseur programmé etc.

Ces moyens de mise en relation sont alors associés à des moyens de délivrance d'informations relatives à cette évolution, ces moyens de délivrance étant désignés par la référence générale 10 sur cette figure.

Ces moyens comprennent par exemple des moyens choisis dans le groupe comprenant des moyens d'affichage d'informations désignés par la référence générale 11 ou encore des moyens d'impression d'un graphique illustrant celles-ci, désignés par la référence générale 12.

Bien entendu, d'autres moyens et d'autres formes de réalisation de ces différents moyens peuvent être envisagés.

On conçoit alors qu'une telle structure présente un certain nombre d'avantages au niveau de l'automatisation et de la simplicité apportée aux utilisateurs.

## Revendications

1. Système de suivi de l'évolution d'au moins une caractéristique d'un mélange réactif dans un récipient (1), **caractérisé en ce qu'**il comporte :
- des moyens (4) d'ajout d'au moins un agent réactif dans le mélange dans le récipient ;
- des moyens (7) de mesure de la quantité d'agent réactif ajoutée ;
- des moyens (8) de relevé de l'évolution de la caractéristique du mélange dans le récipient ;
- des moyens (9) de mise en relation de l'évolution de cette caractéristique en fonction de la quantité d'agent ajoutée ; et
- des moyens (10) de délivrance d'informations relatives à cette évolution.

2. Système selon la revendication 1, **caractérisé en ce que** les moyens (7) de mesure de la quantité d'agent réactif ajoutée comprennent des moyens en forme de compte-gouttes.

3. Système selon l'une quelconque des revendications précédentes, **caractérisé en ce que** la caractéristique dont l'évolution est relevée est une caractéristique choisie dans le groupe comprenant notamment le pH et/ou la conductivité du mélange.

4. Système selon l'une quelconque des revendications précédentes, **caractérisé en ce que** les moyens (10) de délivrance des informations d'évolution sont choisis dans le groupe comprenant notamment des moyens (11) d'affichage et/ou des moyens (12) d'impression d'un graphique illustrant celles-ci.
